# EUROPEAN PATENT APPLICATION

(11) **EP 0 766 942 A1**
(43) Date of publication of application: **09.04.1997**
(21) Application number: 96307230.1
(22) Date of filing: 03.10.1996
(51) Int. Cl.: A47J 37/10, A47J 37/12

(54) **Frying pan having cooking oil supply means**

(30) Priority: 06.10.1995 KR 9528024
(71) Applicant: Park, Dong-Gyun, Songpa-ku, Seoul (KR)
(72) Inventor: Park, Dong-Gyun, Songpa-ku, Seoul (KR)
(74) Representative: Woodward, John Calvin

(57) **Abstract**

A frying pan with an integral cooking oil supply system is disclosed in which the cooking oil is supplied to the frying pan from a reservoir (20) attached thereto. A piston (32) is slidably mounted in a cylinder (29) in the reservoir (20) and, on actuation, supplies cooking oil to the main body (10) of the frying pan. A heat insulating member (16) is coupled at one end to a coupling portion (12) on a wall (10b) of the main body (10) of the frying pan to prevent thermal conduction between the bottom (10a) of the main body (10) and the reservoir (20) and its other end is connected to the heat insulating member (16). Coupling means (18) sealingly connect the heat insulating member (16) and the reservoir (20) together and the reservoir serves as a handle for the frying pan.

## Description

The present invention relates to a frying pan used for cooking food and more particularly to a frying pan with its own cooking oil supply means.

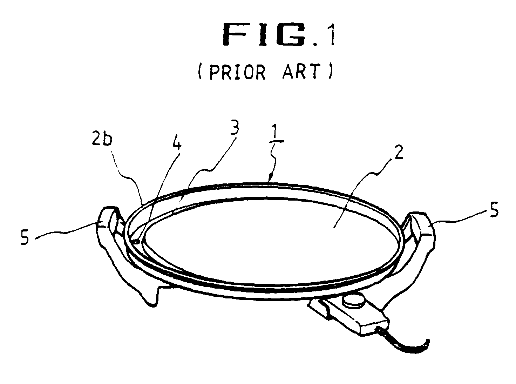

Frying pans of this general type are known and an example is shown in Figure 1 which comprises an electric heating element (not shown) which is installed under bottom 2 of frying pan 1. An annular groove 3 for cooking oil is formed between the periphery of the bottom 2 and circumferential edge 2b. An oil drain hole 4 is provided in the groove 3, and two handles 5 are symmetrically located on opposite sides of the bottom 2 of the frying pan 1.

In the prior art frying pan described above, when a food is to be cooked, the cooking oil has to be placed in the pan using a spoon or directly from a bottle containing the oil. However, this can be a problem if the frying pan is used to cook large amounts of food e.g. in a restaurant as the cooking oil has to be manually replaced after each quantity of food has been cooked in the pan. As a result, it is not only inconvenient to have to repeatedly manually supply the cooking oil to the pan but it is also difficult to supply the cooking oil in the correct amounts which represents a significant inconvenience to the person using the frying pan.

The frying pan of the present invention is intended to overcome or substantially reduce the above described disadvantages.

It is therefore an object of the present invention to provide a frying pan with its own cooking oil supply means, in which the cooking oil is supplied to the bottom of the frying pan in a special manner which renders the pan extremely convenient to us.

It is another object of the present invention to provide a frying pan with its own cooking oil supplying means in which the amount of cooking oil used can be significantly reduced.

According to the present invention, there is provided a frying pan comprising a main body in which food can be cooked characterised by a reservoir for cooking oil connected thereto including cooking oil supply means operable, in use, to supply cooking oil from the reservoir to the main body of the frying pan.

preferably the reservoir also serves as a handle for the frying pan.

Other objects and advantages of the present invention will become more apparent from the following description of a preferred embodiment, by way of example only, with reference to the accompanying drawings in which:
Figure 1 is a perspective view showing a prior art frying pan;
Figure 2 is an exploded perspective view of a frying pan of the invention;
Figure 3A is a sectional view of the frying pan of Figure 2 in its assembled state; and
Figure 3B is an exploded enlarged view of the portion A of Figure 3A.

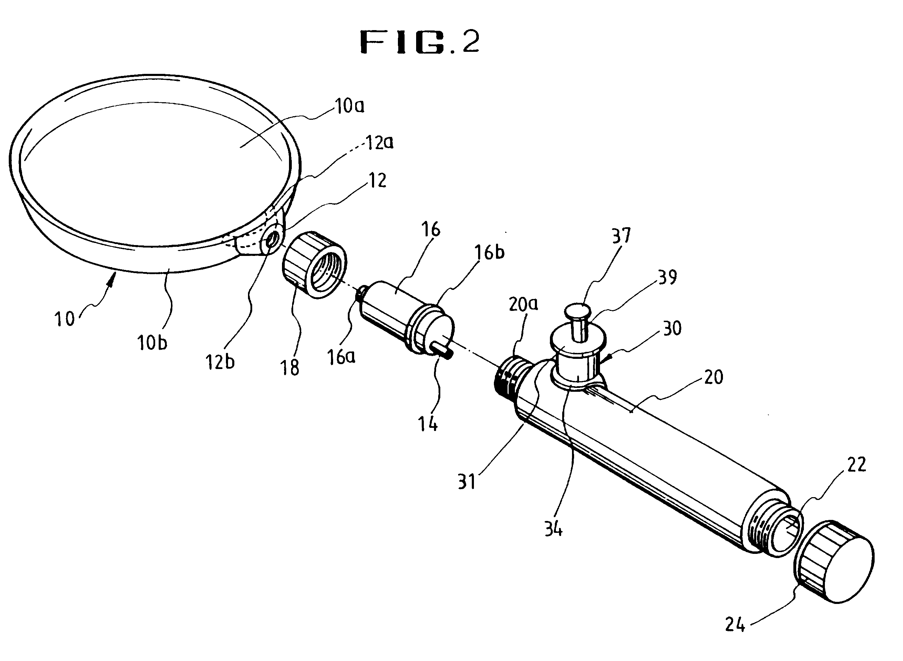

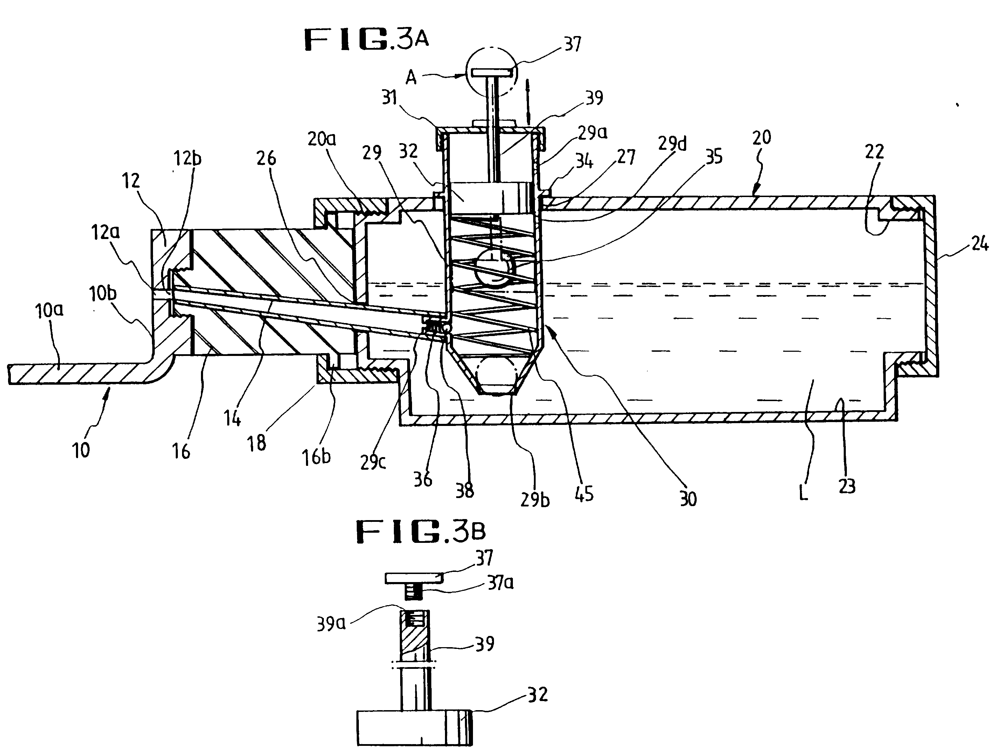

Referring to Figures 2 and 3, there is shown a frying pan with a main body 10 for cooking food placed therein. One end of a heat insulating member 16 is connected to a coupling portion 12 formed on annular wall 10b of the main body 10 to prevent thermal conduction from the main body 10 to a cooking oil storing device or reservoir 20 which is coupled to the other end of the heat insulating member 16. The reservoir 20 also serves as a handle for the frying pan. Coupling means 18 connect the heat insulating member 16 and the cooling oil reservoir 20 together to form an air-tight seal therebetween.

The main body 10 comprises bottom 10a with upstanding wall 10b formed integrally therewith. A plurality of oil supply passages 12a are formed in one side of the wall 10b and communicate with the bottom 10a. The coupling portion 12 has a through hole 12b for receiving cooking oil from the cooking oil reservoir 20 via the heat insulating member 16.

The heat insulating member 16 is coupled to the coupling portion 12 of the wall 10b, and is made of a heat insulating material, so that heat generated in the main body 10 of the frying pan during cooking is prevented from reaching cooking oil stored in the reservoir 20 so any degeneration thereof due to heat is prevented.

The heat insulating member 16 has a threaded coupling protuberance 16a to enable it to be screwed into hole 12b in the coupling portion 12. A flange 16b is integrally formed around the circumference of the member 16 and an oil supply tube 14 providing a through passage in a lengthwise direction through the member 16 for the supply of cooking oil from the reservoir 20 to the bottom 10a of the main body 10.

The coupling protuberance 16a also has a hollow oil supply passage 12b in it communicates with the oil supply tube 14 so that cooking oil can be supplied via the hole 12b and the oil passages 12a in the wall 10b to the bottom 10a of the frying pan.

The cooking oil reservoir 20 is preferably made of a transparent material so that the amount of cooking oil L therein is visible at all times.

The cooking oil reservoir 20 has a threaded portion 20a at one end with a hole 26 therethrough for receiving the oil supply tube 14 of the heat insulating member 16 and also for coupling it with the heat insulating member 16 in an air-tight state by means of the coupling means 18. The cooking oil L is stored in hollow interior 23 of the reservoir 20 which can be filled or emptied via open end 22 which is closed by a removable cap 24. Cooking oil supply means 30 are operable to supply the cooking oil L from the hollow interior 23 of the reservoir 20 through oil supply tube 14 and the oil supply passages 12a and 12b in the wall 10b to the bottom 10a of the frying pan.

The cooking oil supply means 30 is installed in the cooking oil reservoir 20 in such a manner that the cooking oil L can be drawn into it from the hollow 23 of the reservoir 20 and supplied through outlet 29c to the oil supply tube 14 in the heat insulating member 16.

The cooking oil supply means 30 comprises a suction inlet hole 29b through which cooking oil L can be sucked from the hollow portion 23 into a cylinder 29. The cylinder 29 also has an outlet 29c therefrom through which the sucked cooking oil L can be supplied to the oil supply tube 14 in the heat insulating member 16. A cooking oil sucking/discharging unit is mounted in the cylinder 29 for sucking the stored cooked oil L from the hollow interior 23 of the cooking oil reservoir 20 through the inlet hole 29b for supply through the outlet 29c to the oil supply tube 14. The cooking oil sucking/discharging unit is movable against the action of resilient member such as spring 45. A ball 35 is mounted between the resilient member 45 and the inlet hole 29b in the cylinder 29 and is movable in a vertical manner to allow cooking oil L to be sucked into the cylinder 29 from the hollow interior 23 of the cooking oil reservoir 20 during upward movement of the cooking oil sucking/discharging unit and to close the suction hole 29b to prevent the introduction of further cooking oil into the cylinder 29 during a downward movement of piston 32. A cooking oil discharging unit is mounted within the outlet 29c, for supplying cooking oil L through the oil supply tube 14 to the bottom 10a of the main body 10 of the frying pan during a downward movement of the cooking oil sucking/discharging unit. A cap 31 covers the upper open end of the cylinder 29 and a supporting rod 39 of the cooking oil sucking/discharging unit passes through the cap 31.

The cooking oil sucking/discharging unit comprises a piston 32 installed slidably within the cylinder 29 with a rod 39 connected thereto having a pushing member 37 at its other end, the rod 39 passing through the cap 31.

The cylinder 29 also includes an air hole 29a formed on a side of an upper portion of the cylinder 29, for introducing and discharging air to and from the upper portion of the cylinder 29 to allow the piston to be smoothly actuated. An air inlet 29d is formed on a side of a lower portion of the cylinder 29, for introducing a part of the air from the upper portion of the cylinder 29 into the hollow portion 23 of the cooking oil reservoir 20.

The cooking oil discharging unit also includes a ball 38 preferably made of metal such as steel for closing the outlet 29c during upward movement of the cooking oil sucking/discharging unit, and for opening the outlet 29c during downward movement of the cooking oil sucking/discharging unit and resilient means 36 for biassing the ball 38 towards the cylinder 29 during closing of the outlet 29c.

The cylinder 29 is attached to the cooking oil reservoir 20 by welding or soldering supporting members 34 thereto. Alternatively, the cylinder 29 may be threadably coupled to the reservoir 20.

Assembly and operation of the illustrated preferred frying pan of the present invention will now be described.

First, the flange 16 b of the heat insulating member 16 is inserted into the coupling means 18 until it seats therein. Then the coupling protuberance 16a formed on the leading end of the heat insulating member 16 is screwed into the threaded hole 12b in the coupling portion 12 on the side of the wall 10b of the main body 10 in such a manner that the oil passages 12a communicate with the oil supply tube 14. Then the oil supply tube 14 is connected to the outlet 29c of the cylinder 29 to make an air tight seal therewith. The coupling means 18 with the heat insulating member 16 inserted in it is then screwed onto the threaded portion 20a of the cooking oil reservoir 20. As a result, the main body 10 of the frying pan is coupled through the heat insulating member 16 to the cooking oil reservoir 20.

In this condition, one end of the coupling member 18 contacts the flange 16b of the heat insulating member 16, while the other end is threadably coupled to the thread portion 20a so the connection between the oil supply tube 14 and the outlet 29c is securely maintained.

The hollow interior 23 of the cooking oil reservoir 20 is then filled with cooking oil L through hole 22 which is then closed with the cap 24 so cooking oil L cannot leak out.

When the hollow interior 23 of the cooking oil reservoir 20 has been filled with cooking oil L, the main body 10 is placed on heating means such as a cooker (not shown), and the pushing member 37 of the cooking oil sucking/discharging unit is depressed. The piston 32 together with the supporting rod 39 is therefore moved downwardly and cooking oil contained within the cylinder 29 is compressed so the steel ball 38 moves against the action of the resilient means 36 within the outlet 29c and the outlet 29c is opened. Consequently, cooking oil L is supplied through the oil supply tube 14, hole 12b and the oil passages 12a to the bottom 10a of the main body 10 of the frying pan.

In this condition, the steel ball 35 closes the suction hole 29b in the cylinder 29 so cooking oil L within the cylinder 29 cannot return to the hollow interior 23 of the cooking oil reservoir 20.

After the cooking oil L has been supplied through the oil supply tube 14, the piston 32 is forced upwardly by the resilient member 45 and the steel ball 35 is made to move upwardly by the sucking force of the cooking oil L, with the result that the suction hole 29b in the cylinder 29 is opened. Meanwhile, the outlet 29c in the cylinder 29 is closed under the action of the resilient means 36. Consequently, any cooking oil L which remains within the cylinder 29 cannot be supplied to the bottom 10a of the main body 10 of the frying pan, while the cooking oil L in the hollow portion 23 is sucked into the cylinder 29 through the suction hole 29b.

Furthermore, in the case where the piston 32 needs to be actuated many times because a large amount of the food is being cooked or because the bottom 10a of the frying pay is particularly large, the ball 35 closes the suction hole 29b in the cylinder 29, so that cooking oil L within the cylinder 29 cannot return to the cooking oil reservoir 20.

By means of the air holes 29a and 29d which are formed on the side wall of the cylinder 29, air which has been introduced into the space in the cylinder 29 is supplied to the upper portion of the hollow portion 23 of the cooking oil storing device 20, or the air within the upper portion of the hollow portion 23 is supplied into the cylinder 29. Therefore, the piston 23 can move up and down smoothly.

Meanwhile, when cooking of the food in the frying pan is completed, the cap 24 can be opened and any remaining cooking oil L poured out through the hole 22. The hollow portion 23 of the cooking oil storing device 20 can then be cleaned and kept in a clean state.

The cooking oil reservoir 20 is made of a heat resistant transparent material so the level of cooking oil L within the hollow portion 23 can easily be viewed at any time thereby facilitating when it needs to be refilled. It will be appreciated from the foregoing that the required amount of cooking oil can be readily supplied to the bottom of the frying pan by manipulating the piston in a simple and efficient manner. Therefore the frying pan of the invention is very convenient to use, and furthermore, the supply of the cooking oil can be properly adjusted, and the amount of cooking oil consumed can be significantly reduced.

## Claims

1. A frying pan comprising a main body (10) in which food can be cooked and a handle connected thereto **characterised by** a reservoir (20) for cooking oil connected to the main body (10) including cooking oil supply means (30) operable, in use, to supply cooking oil from the reservoir (20) to the main body (10).

2. A frying pan as claimed in claim 1 characterised in that a heat insulating member (16) is provided between the main body (10) and the reservoir (20) and coupling means (18) sealingly connect said heat insulating member (16) and said reservoir (20) together.

3. A frying pan as claimed in claim 2 characterised in that the main body (10) comprises a bottom (10a) with a wall (10b) formed integrally therewith around its periphery, a plurality of oil supply passages (12a) formed in said wall which communicates with said bottom (10a) and a coupling portion (12) having a through hole (12b) therein to allow cooking oil to pass from the reservoir (20) through the heat insulating member (16)to the main body (10).

4. A frying pan as claimed in claim 2 or claim 3 characterised in that the heat insulating member (16) provides, in use, a thermal barrier between the heated main body (10) of the frying pan and the reservoir (20) thereby preventing degeneration of cooking oil in the reservoir (20).

5. A frying pan as claimed in claim 3 or claim 4 characterised in that heat insulating member (16) includes a coupling protuberance (16a) with threads thereon to threadably connect it to the hole (12b) in the coupling portion (12), a flange (16b) formed around the circumference of said member (16) and an oil supply tube (14) providing a through passage in a lengthwise direction to allow cooking oil to be supplied to the bottom (10a) of said main body (10) of the frying pan from the reservoir (20).

6. A frying pan as claimed in any preceding claim characterised in that said cooking oil reservoir (20) is made of a transparent material and serves as the handle for the frying pan.

7. A frying pan as claimed in claim 5 or claim 6 characterised in that the cooking oil reservoir (20) comprises a threaded portion (20a) at one end having a hole (26) therein for receiving the oil supply tube (14) of the heat insulating member (16) when said portion is sealingly connected to said heat insulating member (16) by coupling means (18), an aperture (22) closed by a removable cap (24) to allow the reservoir (20) to be emptied and refilled with cooking oil, the cooking oil supply means (30) being operable to supply cooking oil from the reservoir (20) through said oil supply tube (14) and said oil supply passages (12a) to the bottom (10a) of the main body (10) of the frying pan.

8. A frying pan as claimed in claim 7 characterised in that the cooking oil supplying means (30) is mounted in the cooking oil reservoir so that it can draw in cooking oil from the reservoir (20) and supply it through an outlet hole (29c) to the supply tube (14) in said heat insulating member (16).

9. A frying pan as claimed in claim 8 characterised in that the cooking oil supply means (30) comprises a cylinder (29) having an inlet hole (29b) to admit cooking oil from the reservoir (20) to the interior thereof and an outlet (29c) for supplying cooking oil to the oil supply tube (14) in the heat insulating member (16), a cooking oil sucking/discharging unit in said cylinder (29) operable to suck cooking oil from the reservoir (20) through said inlet hole (29b) and supply it via the outlet hole (29c) to the oil supply tube (14), a resilient member (35) to bias the cooking oil sucking/discharging unit (30) and a ball (35) mounted between the biassing member (35) and the inlet hole (29b) and movable to open the inlet hole (29b) to permit cooking oil to be sucked into said cylinder (29) from the reservoir (20) during an upward movement of said cooking oil sucking/discharging unit, and to close said inlet hole (29b) and prevent the introduction of any further cooking oil into the cylinder (29) during a downward movement, a one-way valve (36) mounted within said outlet hole (29c) operable to supply cooking oil via the oil supply tube (14) to the bottom (10a) of the main body (10) of the frying pan during a downward movement of said cooking oil sucking/discharging unit (30) and to close the outlet hole (29c) during an upward movement.

10. A frying pan as claimed in claim 9 characterised in that the upper end of the cylinder (29) is open but closed by a cap (31), the cooking oil sucking/discharging unit comprising a piston (32) slidable in the cylinder (29) and having a rod (39) connected thereto which extends through the cap (31) with a pushing member (37) at its free end by means of which the piston (32) can be depressed.
